# EUROPEAN PATENT APPLICATION

(11) **EP 1 548 364 A2**
(43) Date of publication of application: **29.06.2005**
(21) Application number: 04030125.1
(22) Date of filing: 20.12.2004
(51) Int. Cl.: F23R 3/56, F23C 11/04, F02C 3/16, H02K 7/18, F16C 39/06, F23R 3/50, B81B 7/00, F02K 7/00

(54) **A rotary combustor, and electrical generator comprising a combustor of this type**

(30) Priority: 24.12.2003 IT TO20031045
(71) Applicant: C.R.F. Società Consortile per Azioni, 10043 Orbassano (TO) (IT)
(72) Inventor: Perlo, Pietro, 10043 Orbassano (Torino) (IT); Innocenti, Gianfranco, 10043 Orbassano (Torino) (IT); Repetto, Piermario, 10043 Orbassano (Torino) (IT); Sgroi, Mauro, 10043 Orbassano (Torino) (IT); Bollito, Gianluca, 10043 Orbassano (Torino) (IT); Pairetti, Bartolo, 10043 Orbassano (Torino) (IT); Monferino, Rossella, 10043 Orbassano (Torino) (IT); Finizio, Roberto, 10043 Orbassano (Torino) (IT); Carvignese, Cosimo, 10043 Orbassano (Torino) (IT)
(74) Representative: Quinterno, Giuseppe

(57) **Abstract**

The combustor (1) comprises a stationary structure (2; 102) and at least one tubular rotor (3; 3', 3") supported rotatably about an axis (4) by the structure (2; 102) by means of contactless suspension devices (5-8; 5', 5", 6', 6") there being formed within this rotor at least one combustion chamber (20; 20', 20") having at least one orientated lateral outflow aperture (21; 22; 23, 24) for the ejection of the combustion gases. The rotor (3; 3', 3") has a narrow circumferential slot (30; 30', 30") through which there extend at least one controlled stationary injector (31; 31', 31") of fuel and combustion agent and an associated igniter (32; 32', 32") which is also stationary.

A control unit (ECU; 35) operates the injector (31; 31', 31") and the igniter (32; 32', 32") according to predetermined procedures, in such a way as to generate a detonation wave which is propagated in the chamber (20; 20', 20"), and to cause the rotor (3; 3', 32) to rotate as a result of the thrust due to the combustion gases emitted through the lateral outflow aperture (21, 22; 23, 24).

## Description

The present invention relates to an innovative combustor of a rotary type, usable for example as an engine, particularly for driving an electrical generating machine such as a dynamo in a thermoelectric power station.

The combustor according to the invention is essentially characterized in that it comprises
- a stationary structure,
- at least one tubular rotor of annular circular shape, supported rotatably about an axis by the said stationary structure by contactless suspension means, there being formed within this rotor at least one combustion chamber which has at least one orientated lateral outflow aperture for the ejection of the combustion gases; the said at least one rotor having a narrow circumferential slot through which there can be extended into the said at least one chamber controlled stationary means for injecting fuel and combustion agent and associated controlled ignition means which are also stationary; and
- control means designed to operate the said injector. means and the ignition means according to predetermined procedures, in such a way as to generate a detonation wave which is propagated in the said at least one chamber, and to cause the rotor to rotate at a controlled speed as a result of the thrust due to the combustion gases emitted through the lateral outflow aperture.

Conveniently, in order to ensure that a detonation wave is actually generated in the said at least one chamber, the chamber conveniently has a length greater than or equal to approximately 40 times the mean transverse dimension of this chamber.

Advantageously, the aforesaid contactless suspension means are magnetic suspension means.

The invention also relates to an electrical generator comprising a rotor and a stator, in which the rotor is rotated by a rotary combustor of the type defined above.

Further characteristics and advantages of the invention will be made clear by the following detailed description provided purely by way of example and without restrictive intent, with reference to the attached drawings, in which
Figure 1 is a plan view from above of a first rotary combustor according to the present invention;
Figure 2 is a sectional view essentially taken through the line II-II of Figure 1;
Figure 3 is a partial cross-sectional view of a variant embodiment of a rotary combustor according to the invention, showing in particular an alternative embodiment of means of magnetic suspension of the rotor;
Figure 4 is a partial sectional view of a further embodiment of a rotary combustor according to the invention including two separate coaxial rotors;
Figure 5 is a sectional view of a further embodiment of a rotary combustor including a single annular rotor having a cross section essentially in the shape of a figure of 8;
Figure 6 is a variant embodiment of the rotary combustor shown in Figure 5; and
Figure 7 is a representation which shows a further variant of a rotary combustor according to the invention, with an associated control system.

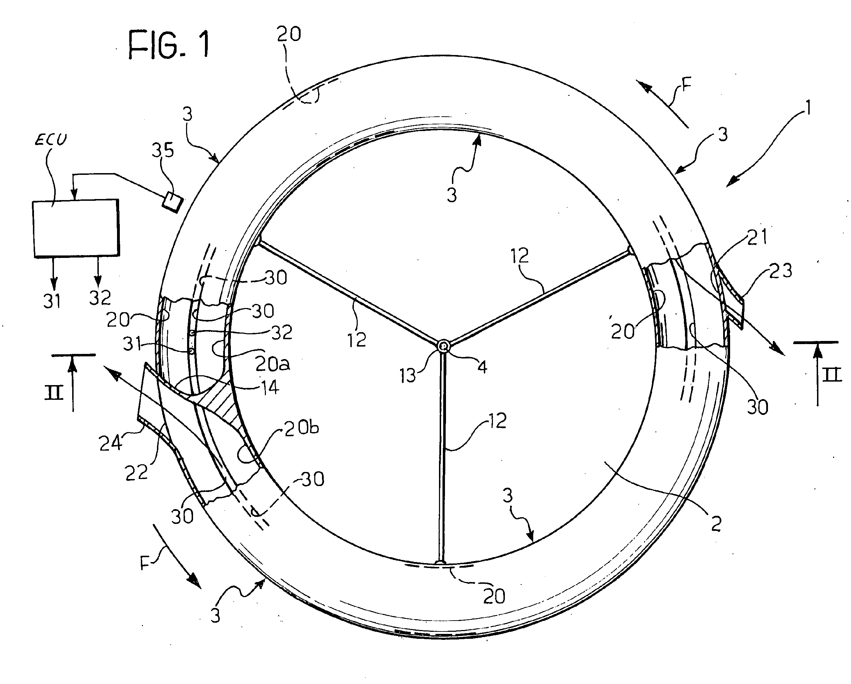

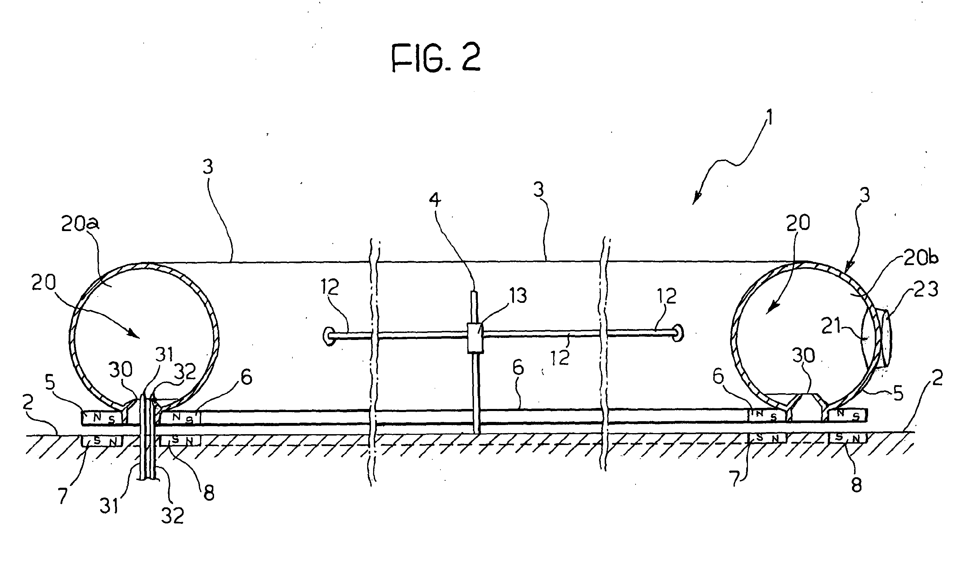

In Figures 1 and 2, the number 1 indicates the whole of a rotary combustor according to the present invention.

This combustor 1 comprises a stationary structure, illustrated schematically in Figure 2 and indicated therein by the number 2.

In the embodiments illustrated by way of example in Figures 1 to 3, the rotary combustor 1 also comprises a tubular rotor 3 of annular circular shape. This rotor 3 is supported rotatably about an axis 4 by contactless suspension means. In the embodiment illustrated by way of example, these suspension means comprise annular permanent magnets 5 and 6 fixed to the rotor 3, magnetized in a direction parallel to the axis 4, and having the same magnetic polarity, "south" for example, in their lower parts. Corresponding annular magnets 7 and 8 fixed to the stationary structure 2 face the annular magnets 5 and 6 which are fixed to the rotor 3. The magnets 7 and 8 are also magnetized parallel to the axis 4, and have in their upper part a polarity, "south" for example, identical to that directed towards it by the magnets 5 and 6.

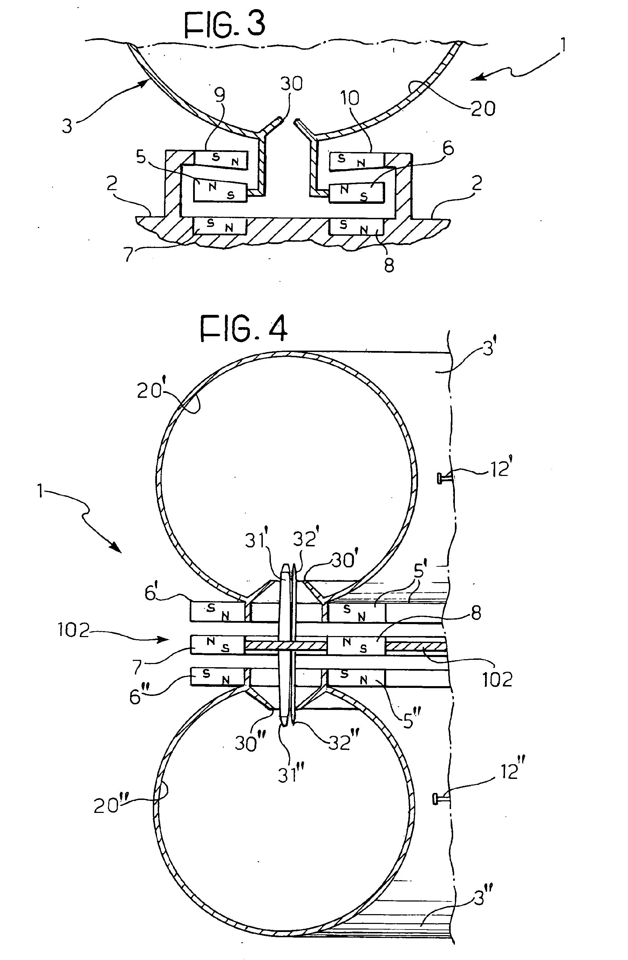

The magnetic suspension arrangement described above is simple and schematic and is described for guidance only. Contactless suspension systems, particularly magnetic systems, produced by known methods can be used for suspending the rotor 3 with respect to the stationary structure 2. An example of a possible alternative embodiment is shown in Figure 3, in which the magnets 5 and 6 fixed to the rotor 3 are interposed between the previously described magnets 7 and 8 of the stationary structure, and further magnets 9 and 10, also fixed to the stationary structure 2, but on the opposite side from the magnets 7 and 8. The facing poles of the magnets 5, 6 and 9, 10 are identical, being all "north", for example.

Examples of further embodiments of contactless suspension, particularly of the magnetic type, are described in the preceding European patent application No. 04017945.9 filed in the name of the present applicant on 29 July 2004 and relating to a "flying machine".

With reference to the embodiment shown in Figures 1 and 2, the rotor 3 is connected to a plurality of spokes 12, interconnected centrally at a hub 13, fitted rotatably about the axis 4.

In the embodiment shown in Figures 1 and 2, the tubular rotor 3 forms within itself a curved combustion chamber 20, which extends essentially along the whole circumference of the rotor. With reference to Figure 1 in particular, the combustion chamber 20 has a leading end 20a and a terminal end 20b which are adjacent to each other and separated by a shaped dividing structure indicated by 14.

The combustion chamber 20 has an intermediate lateral aperture 21 and a terminal lateral aperture 22, for the ejection of the combustion gases. These apertures are joined to corresponding nozzles 23 and 24, appropriately shaped in a known way and orientated in the same direction about the axis of rotation 4.

The intermediate aperture 21 and the associated nozzle 23 have a (minimum) cross section smaller than the (minimum) cross section of the terminal aperture 22 and the associated nozzle 24. The cross sections of the said apertures and of the associated nozzles are determined in such a way that, in operation, the reaction thrusts exerted as a result of the ejection of the combustion gases through the said apertures are substantially balanced.

The part of the rotor 3 facing the stationary structure 2 has a narrow circumferential slot, indicated by 30, through which extends a controlled injector of fuel and combustion agent 31 and an associated controlled ignition device 32.

Both the injector 31 and the igniter 32 are stationary, in other words fixed to the structure 2.

The fuel and combustion agent injected into the combustion chamber 20 can be, for example, hydrogen and oxygen, or, more generally, liquid or gaseous hydrocarbons and air, in known proportions for detonation systems.

The rotary combustor is associated with an electronic control unit, indicated by ECU in Figure 1. This unit is designed to control the injector 31 and the igniter 32 according to predetermined procedures, by means of known interface devices which are not illustrated, in such a way that a combustion reaction is initiated in the chamber 20 and can be propagated in this chamber at ultrasonic velocity, thus generating a true detonation wave. The ejection of the exhaust gases through the nozzles 23 and 24 causes the rotor 3 to rotate by reaction in the direction indicated by the arrows F in Figure 1.

Conveniently, the rotation speed of the rotor can be controlled by the ECU by a closed loop system, according to the actual rotation speed of the rotor detected by means of a sensor 35 (Figure 1) of known type.

Conveniently, in order to ensure that the combustion reaction in the chamber 20 takes place by detonation rather than by simple deflagration, the length of the said chamber 20 is greater than or equal to approximately 40 times the mean transverse dimension of this chamber, and is preferably in the range from 40 to 100 times this mean transverse dimension.

The system operates preferably in pulsed detonation mode.

A number of variants of the embodiment described above can be produced.

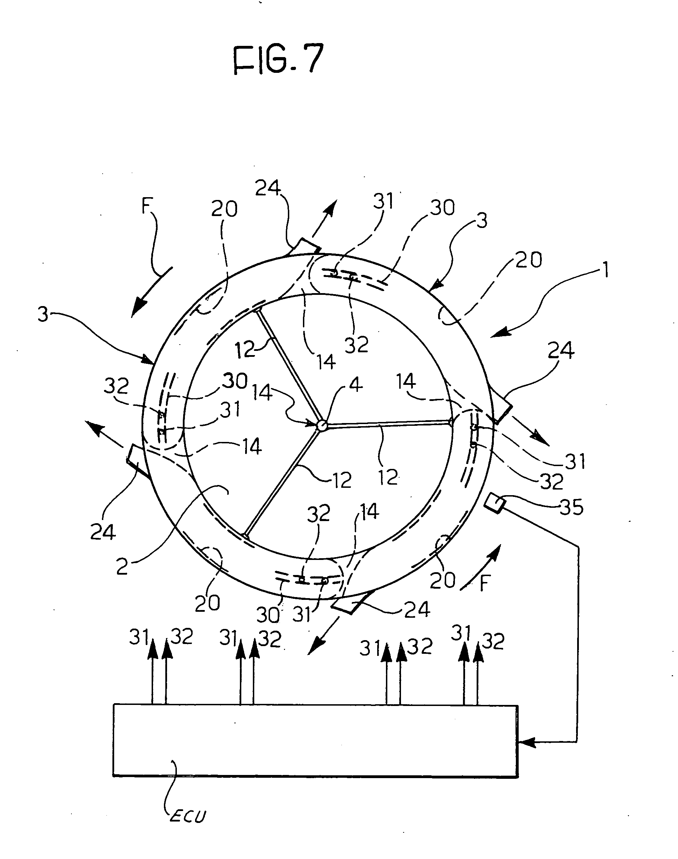

For example, Figure 7 illustrates an embodiment in which a plurality of adjacent combustion chambers 20 are formed in the rotor 3 and are separated by shaped structures. 14, each of these chambers being provided with at least one corresponding orientated lateral outflow aperture with a corresponding nozzle 24. The rotary combustor of Figure 7 is associated with a multiplicity of injectors 31 and associated igniters 32, the number of which is equal to the number of combustion chambers 20. These injectors and associated igniters extend into the combustion chambers 20 through the narrow circumferential slot 30 of the rotor.

The various pairs of injectors 31 and igniters 32 are controlled by a single electronic control unit ECU, according to predetermined procedures, according to the actual rotation speed of the rotor 3 detected by means of a sensor 35 connected to this unit.

The considerations expressed previously in relation to the embodiment illustrated in Figures 1 and 2 are applicable to the individual combustion chambers 20 of the rotary combustor 1 shown in Figure 7.

Figure 4 shows a partial view of a variant embodiment of a rotary combustor 1 according to the invention.

In this figure, parts and elements identical or substantially similar to parts described previously have been given the same numerical references.

In the variant shown in Figure 4, the combustor 1 comprises a pair of coaxial rotors 3', 3", similar to the rotor 3 described previously. The rotor 3" is substantially a mirror image of the rotor 3' reflected about a horizontally plane of symmetry. The individual parts or components associated with the different rotors in Figure 4 are identified with the numbers used previously, with the addition of one apostrophe for the upper rotor 3', and two apostrophes for the lower rotor 3".

The rotors 3' and 3" are associated, in particular, with corresponding controlled injectors 31', 31" and corresponding controlled igniters 32', 32", which are supported on opposite sides of a single stationary support structure 102 which extends between these rotors. In the embodiment shown by way of example, this structure 102 carries permanent magnets 7 and 8 which interact, respectively, with corresponding magnets 5', 6' and 5", 6" of the two rotors, to provide their magnetic suspension.

The combustor according to the general architecture of Figure 4 can be made in such a way that its rotors 3' and 3" rotate for operation in the same direction, or in opposite directions.

In other respects, the considerations already expressed in relation to the previously described versions are also applicable to the combustor shown in Figure 4.

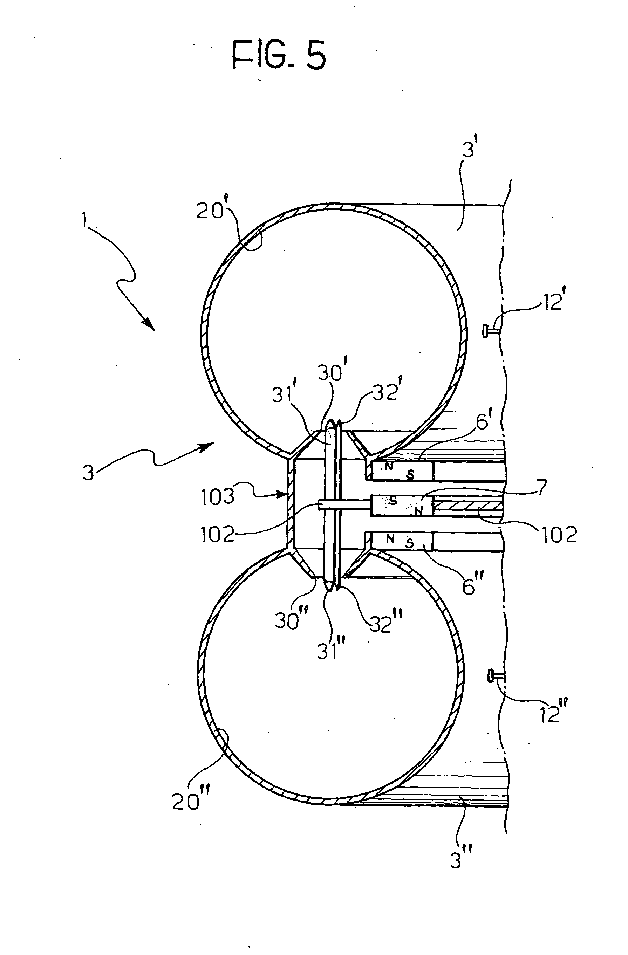

Figure 5 shows a further variant embodiment. In this figure also, parts and elements identical or substantially similar to components described previously have again been given the same numerical references as those used previously.

The rotor 3 of the combustor 1 shown in Figure 5 has a cross section essentially in the form of a figure 8. In this rotor there are formed two annular outermost portions 3', 3", interconnected by an intermediate portion 103 of relatively small cross section. Each of the annular outermost portions 3', 3" corresponds substantially to each of the rotors of the combustor of Figure 4. These portions are, however, interconnected in the intermediate portion 103 and are therefore fixed to each other with respect to rotation.

In Figure 5, components and parts of the two outermost portions 3', 3" of the rotor 3 are identified with the same numerical references as those used previously, with the addition of one apostrophe for the upper portion and two apostrophes for the lower portion.

In each of the annular portions 3', 3" of the rotor 3 of Figure 5 there is formed at least one combustion chamber, provided with at least one corresponding lateral ejection aperture with an associated nozzle. These combustion chambers 20', 20" are associated with corresponding controlled injectors 31', 31" and corresponding igniters 32', 32", carried on opposite sides of a single stationary support structure 102. This structure 102 extends into the intermediate portion 103 of the rotor 3, and the injector devices and the associated igniters extend through corresponding narrow circumferential slots 30", 30" facing the two outermost portions 3', 3" of the rotor.

In the embodiment shown schematically in Figure 5, the whole of the rotor 3 is suspended without contact with the stationary support structure 102, by means of magnets 6', 6" fixed to the rotor and interacting with a corresponding annular magnet 7 carried by the said stationary structure 102.

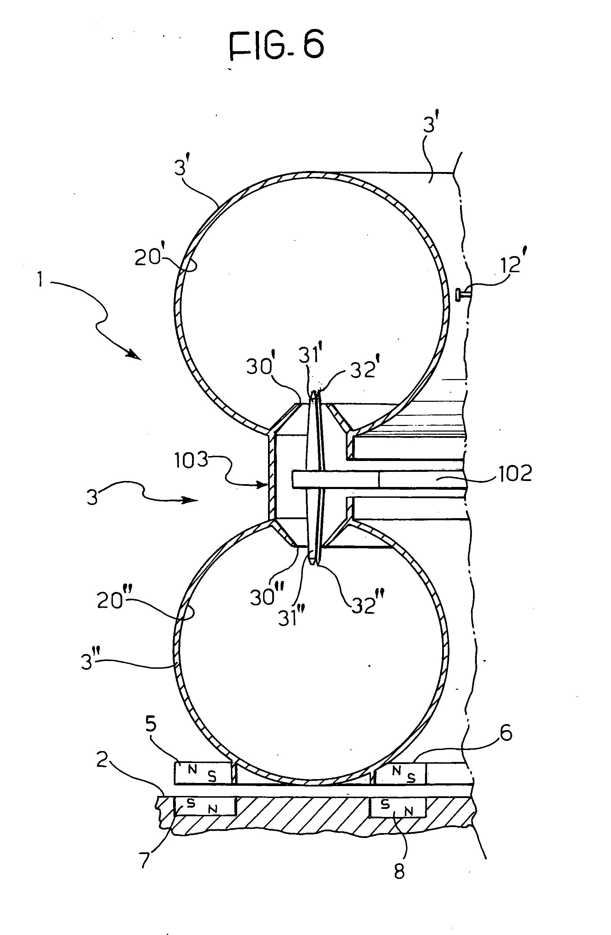

Figure 6 shows a variant embodiment of the rotary combustor described above with reference to Figure 5. Corresponding parts and elements in Figure 6 are identified with the numerical references used previously in Figure 5.

In the variant shown in Figure 6, the rotor 3 again has a cross section essentially in the form of a figure 8, with two annular outermost portions 3', 3" interconnected by an intermediate portion 103.

The substantial difference between the variant shown in Figure 6 and the variant shown in Figure 5 lies in the different location of the magnets used to suspend the rotor with respect to the stationary structure 2. In the version shown in Figure 6, the rotor 3 is associated with annular permanent magnets 5 and 6, connected to the lower portion 3", and positioned facing corresponding magnets 7 and 8 carried by the stationary structure 2.

In other respects, the rotary combustor shown in Figure 6 is essentially identical to that shown in Figure 5.

Rotary combustors made according to the present invention can be used as micro-engines, particularly for the operation of electrical generating machines. In these applications, the rotor or each rotor of a combustor of the types described above is coupled, in a way which is not illustrated, to the rotor of such an electrical generating machine.

Conveniently, at least some of the rotating magnets used for the suspension of the rotor or rotors of a rotary combustor according to the invention can be used additionally as the induction part of such an electrical generating machine.

Clearly, provided that the principle of the invention is retained, the forms of embodiment and the details of construction can be varied widely from what has been described and illustrated purely by way of example and without restrictive intent, without departing from the scope of the invention as defined in the attached claims.

## Claims

1. A rotary combustor (1) comprising
- a stationary structure (2; 102),
- at least one tubular rotor (3; 3', 3") of annular circular shape, supported rotatably about an axis (4) by the said stationary structure (2; 102) by contactless suspension means (5-8; 5', 5", 6', 6"), there being formed within this rotor at least one combustion chamber (20; 20', 20") which has at least one orientated lateral outflow aperture (21; 22; 23, 24) for the ejection of the combustion gases; the said at least one rotor (3; 3', 3") having a narrow circumferential slot (30; 30', 30") through which there can be extended into the said at least one chamber (20; 20', 20") controlled stationary means (31; 31', 31") for injecting fuel and combustion agent and associated controlled ignition means (32; 32', 32") which are also stationary; and
- control means (ECU; 35) designed to operate the said injector means (31; 31', 31") and the ignition means (32; 32', 32") according to predetermined procedures; in such a way as to generate a detonation wave which is propagated in the said at least one chamber (20; 20' 20"), and to cause the said at least one rotor (3; 3', 32) to rotate at a controlled speed as a result of the thrust due to the combustion gases emitted through the said lateral outflow aperture (21, 22; 23, 24).

2. A rotary combustor according to Claim 1, in which there is formed in the said at least one rotor (3) a single circumferential combustion chamber (20), with a leading end (20a) and a terminal end (20b) which are adjacent to each other and are separated by a dividing structure (14); the said lateral outflow aperture (22) being formed in the terminal end (20b) of the said chamber (20).

3. A rotary combustor according to Claim 1, in which there is formed in the said at least one rotor a plurality of separate and adjacent combustion chambers (20), each of which is provided with at least one corresponding orientated lateral outflow aperture (24).

4. A rotary combustor according to Claim 2 or 3, in which the said at least one combustion chamber (20; 20', 20") has at least one further lateral outflow aperture (21; 23) in an intermediate position between the ends (20a, 20b) of the chamber (20); the said at least one further outflow aperture (21, 23) having a (minimum) cross section smaller than the (minimum) cross section of the terminal outflow aperture (22, 24) .

5. A rotary combustor according to any one of the preceding claims, comprising a pair of facing coaxial rotors (3', 3") rotating for operation in the same direction, or in opposite directions, and associated with corresponding controlled injector means (31', 31") and corresponding controlled ignition means (32', 32").

6. A rotary combustor according to Claim 5, in which the injector means (31', 31") and the ignition means (32', 32") associated with the said rotors (3', 3") are carried on opposite sides of a single support structure (102) which is fixed for operation, and extend through corresponding narrow facing circumferential slots (30', 30") of the said rotors (3', 3").

7. A rotary combustor according to any one of Claims 1 to 4,' in which the said rotor (3) has a cross section essentially in the form of a figure of 8, and there are formed within it a first and a second annular outermost portion (3', 3") interconnected by an intermediate portion (103) of smaller cross section; there being formed in each of the said annular outermost portions (3', 3") at least one combustion chamber (20', 20") which is provided with at least one corresponding lateral outflow aperture; the combustion chambers (20', 20") of the said outermost portions (3', 3") being associated with corresponding controlled injector means (31', 31") and corresponding controlled igniter means (32', 32"). which are carried on opposite sides of a single support structure (102) which is fixed for operation, and which extends through the said intermediate, portion (103) of the rotor (3); the said injector means (31', 31") and the associated igniter means (32', 32") extending through corresponding narrow facing circumferential slots (30', 30") of the said outermost portions (3', 32) of the rotor (3).

8. A rotary combustor according to any one of the preceding claims, in which the said stationary structure (2; 102) comprises a central rotation support (4), and in which the said at least one rotor (3; 3', 3") comprises a central hub (13) fitted rotatably about the axis of the rotation support (4) of the said stationary structure (2; 102).

9. A rotary combustor according to any one of the preceding claims, in which the said at least one combustion chamber (20; 20', 20") has a length greater than or equal to approximately 40 times the mean transverse dimension of the chamber (20; 20', 20").

10. A rotary combustor according to any one of the preceding claims, in which the said contactless suspension means are magnetic suspension means.

11. A rotary combustor according to Claim 10, in which the said suspension means comprise a plurality of permanent magnets (5-8; 5', 6', 5", 6").

12. An electrical generator, comprising a stator, and a rotor coupled to a rotary combustor according to one or more of the preceding claims.

13. An electrical generator according to Claim 12, including a rotary combustor according to Claims 10 and 11, and in which magnets (5-8; 5', 6', 5", 6") of the aforesaid suspension means are used at least partially as the induction part of the generator.
